(19) Europäisches Patentamt
European Patent Office
Office européen des brevets

(11) Veröffentlichungsnummer: **0 415 879 A2**

(12) **EUROPÄISCHE PATENTANMELDUNG**

(21) Anmeldenummer: **90810610.7**

(51) Int. Cl.⁵: **C08G 59/18**

(22) Anmeldetag: **14.08.90**

(30) Priorität: **23.08.89 CH 3052/89**

(43) Veröffentlichungstag der Anmeldung:
**06.03.91 Patentblatt 91/10**

(84) Benannte Vertragsstaaten:
**DE FR GB IT NL**

(71) Anmelder: **CIBA-GEIGY AG**
**Klybeckstrasse 141**
**CH-4002 Basel(CH)**

(72) Erfinder: **Steinmann, Bettina, Dr.**
**Les Russilles**
**CH-1724 Praroman(CH)**
Erfinder: **Seiz, Wolfgang, Dr.**
**Alemannenweg 10**
**CH-4148 Pfeffingen(CH)**

(54) **Carboxylterminierte Polyhydroxyester und deren Verwendung.**

(57) Härtbare Stoffgemische enthaltend
(a) ein Epoxidharz und
(b) einen carboxylterminierten Polyhydroxyester erhältlich durch Umsetzung eines Diepoxids mit einer Dicarbonsäure in Gegenwart eines basischen Katalysators, wobei die Mengen des Diepoxids und der Dicarbonsäure so gewählt werden, dass pro Epoxidgruppe des Diepoxids 1,04 bis 1,4 Carboxylgruppen der Dicarbonsäure vorhanden sind, eignen sich für die Herstellung von vernetzten Produkten, insbesondere als Klebstoffe oder für die Herstellung von flexiblen Beschichtungen.

EP 0 415 879 A2

# CARBOXYLTERMINIERTE POLYHYDROXYESTER UND DEREN VERWENDUNG

Die Erfindung betrifft bestimmte carboxylterminierte Polyhydroxyester erhältlich durch Umsetzung von Diepoxiden mit Dicarbonsäuren, bestimmte Gemische dieser Verbindungen, ein Verfahren zu deren Herstellung und deren Verwendung, insbesondere als Komponenten von härtbaren Epoxidharz-Stoffgemischen.

Die Verwendung von Verbindungen mit mehreren Carboxylgruppen, wie Polycarbonsäuren oder Polyestern mit endständigen Carboxylgruppen als Härtungsmittel für Epoxidharze ist bekannt. Solche Stoffgemische werden z.B. als Pulverlacke eingesetzt und sind beispielsweise in den US 4,175,173, US 4,147,737 oder US 3,397,254 beschrieben.

Es wurde nun gefunden, dass Epoxidharz-Stoffgemische mit besonders guten Eigenschaften erhalten werden, wenn bestimmte carboxylterminierte Polyhydroxyester als Härtungsmittel verwendet werden.

Gegenstand der Erfindung sind härtbare Stoffgemische enthaltend

(a) ein Epoxidharz und

(b) einen carboxylterminierten Polyhydroxyester erhältlich durch Umsetzung eines Diepoxids mit einer Dicarbonsäure in Gegenwart eines basischen Katalysators, wobei die Mengen des Diepoxids und der Dicarbonsäure so gewählt werden, dass pro Epoxidgruppe des Diepoxids 1,04 bis 1,4 Carboxylgruppen der Dicarbonsäure vorhanden sind.

Die Mengen der Komponenten (a) und (b) der erfindungsgemässen Stoffgemische werden vorzugsweise so gewählt, dass pro Epoxidgruppe des Epoxidharzes (a) 0,15 bis 1 Carboxylgruppen, insbesondere 0,3 bis 1 Carboxylgruppen des Polyhydroxyesters (b) vorhanden sind. Bei der Härtung können dabei sowohl die Carboxylgruppen als auch die Hydroxylgruppen des carboxylterminierten Polyesters mit dem Epoxidharz reagieren.

Als Komponente (a) der Stoffgemische kann im Prinzip jede in der Technik der Epoxidharze übliche Verbindung eingesetzt werden. Bevorzugt werden Epoxidharze mit im Durchschnitt mehr als zwei Epoxidgruppen pro Molekül.

Beispiele für Epoxidharze sind:

1) Polyglycidyl- und Poly-(ß-methylglycidyl)-ester erhältlich durch Umsetzung einer Verbindung mit mindestens zwei Carboxylgruppen im Molekül und Epichlorhydrin bzw. ß-Methyl-epichlorhydrin. Die Umsetzung erfolgt zweckmässig in der Gegenwart von Basen.

Als Verbindungen mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(ß-methylglycidyl)ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1 -Trimethylolpropan, Pentaerythrit, Sorbit, sowie von Polyepichlorhydrinen.

Sie leiten sich aber auch beispielsweise ab von cycloaliphatischen Alkoholen wie 1,4-Cyclohexandimethanol, Bis(4-hydroxycyclohexyl)methan oder 2,2-Bis(4-hydroxycyclohexyl)propan oder sie besitzen aromatische Kerne wie N,N-Bis(2-hydroxyethyl)anilin oder p,p′-Bis(2-hydroxyethylamino)diphenylmethan.

Die Epoxidverbindungen können sich auch von einkernigen Phenolen ableiten, wie beispielsweise von Resorcin oder Hydrochinon; oder sie basieren auf mehrkernigen Phenolen, wie beispielsweise Bis(4-hydroxyphenyl)methan, 4,4′-Dihydroxybiphenyl, Bis(4-hydroxyphenyl)sulfon, 1,1,2,2-Tetrakis-(4-hydroxyphenyl)ethan, 2,2-Bis(4-hydroxyphenyl)propan, 2,2-Bis(3,5-dibrom-4-hydroxyphenyl)propan sowie auf Novolaken erhältlich durch Kondensation von Aldehyden wie Formaldehyd, Acetaldehyd, Chloral oder Furfuraldehyd

mit Phenolen wie Phenol, oder mit Phenolen, die im Kern mit Chloratomen oder $C_1$-$C_9$Alkylgruppen substituiert sind, wie beispielsweise 4-Chlorphenol, 2-Methylphenol oder 4-tert-Butylphenol oder durch Kondensation mit Bisphenolen, so wie oben beschrieben.

III) Poly(N-glycidyl) Verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis-(4-methylaminophenyl)methan.

Zu den Poly(N-glycidyl) Verbindungen zählen aber auch Triglycidylisocyanurat, N,N′-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl) Verbindungen, beispielsweise Di-S-glycidylderivate, die sich von Dithiolen, wie beispielsweise Ethan-1,2-dithiol oder Bis(4-mercaptomethylphenyl)ether ableiten.

V) Cycloaliphatische Epoxidharze, beispielsweise Bis(2,3-epoxycyclopentyl)ether, 2,3-Epoxycyclopenrylglycidylether, 1,2-Bis(2,3-epoxycyclopentyloxy)ethan, 3,4-Epoxycyclohexylmethyl-3′,4′-epoxycyclohexancarboxylat oder Bis(3,4-epoxycyclohexyl-metltyl)ester von aliphatischen Dicarbonsäuren, wie Bis(3,4-epoxycyclohexylmethyl)adipat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N′-(2-glycidyloxypropyl)- 5,5-dimethylhydantoin oder 2-Glycidyloxy-(1,3-bis(5,5-dimethyl- 1 - glycidylhydantoin-3-yl)propan.

Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.

Besonders bevorzugt als Epoxidharze werden Polyglycidylether von Bisphenolen, wie beispielsweise von 2,2-Bis(4-hydroxyphenyl)propan (Bisphenol A) oder Bis(4-hydroxyphenyl)methan (Bisphenol F), von Novolaken, die durch Umsetzung von Formaldehyd mit einem Phenol gebildet werden, oder Glycidylderivate der oben erwähnten Heterocyclen, insbesondere Triglycidylisocyanurat.

Die als Komponente (b) der erfindungsgemässen härtbaren Stoffgemische zu verwendenden carboxylterminierten Polyhydroxyester sind in polaren organischen Lösungsmitteln lösliche, viskose bis feste thermoplastische, sowohl Hydroxylgruppen als auch Carboxylgruppen enthaltende Polyester, welche zum Teil noch neu sind.

Sie können durch Umsetzung eines Diepoxids mit einer Dicarbonsäure im stöchiometrischen Verhältnis von 1 zu 1,04 bis 1,4 in Gegenwart eines basischen Katalysators hergestellt werden. Die Reaktion kann am Beispiel der Umsetzung eines Diglycidylethers wie folgt dargestellt werden:

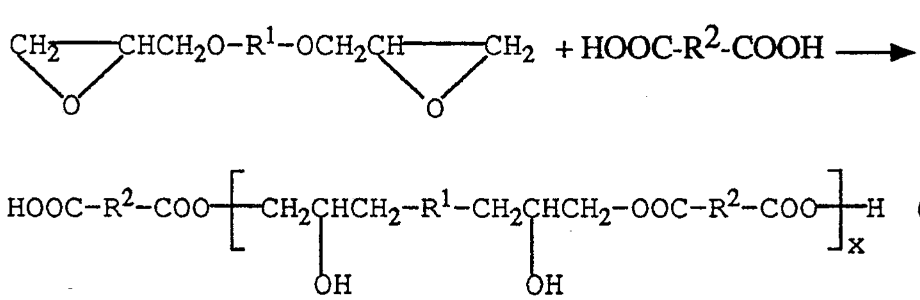

(I).

Neben der oben dargestellten linearen Struktur der carboxylterminierten Polyhydroxyester entstehen bei der Synthese auch verzweigte Polymere, welche durch Veretherung der entstandenen sekundären Hydroxylgruppen mit den noch nicht reagierten Epoxidgruppen gebildet werden.

Der Ueberschuss der Dicarbonsäure bei der Umsetzung mit dem Diepoxid muss, wie erwähnt, so gewählt werden, dass pro Epoxidgruppe 1,04 bis 1,4 Carboxylgruppen vorhanden sind. Ist der Ueberschuss kleiner als definiert, kommt es zu vorzeitiger Gelierung bzw. zur Bildung eines unlöslichen Produktes; wenn der Ueberschuss zu gross ist, können andererseits keine Produkte mit genügend hohem Molekulargewicht erhalten werden.

Die Synthese kann sowohl in einem geeigneten Lösungsmittel als auch vorzugsweise in der Schmelze durchgeführt werden. Beispiele geeigneter Lösungsmittel sind Tetrahydrofuran, Dioxan, Toluol oder Methylethylketon.

Geeignete basische Katalysatoren sind beispielsweise Alkalimetallhydroxide, wie NaOH oder KOH, oder

organische Basen, wie insbesondere stickstoffhaltige Heterocyclen oder tertiäre Amine. Beispiele geeigneter Katalysatoren sind Triethylamin, Benzyldiethylamin, Benzyldimethylamin, Tri-n-butylamin, Triisopropanolamin, N,N-Dimethylacetamid oder Imidazol.

Die Umsetzung erfolgt geeigneterweise bei erhöhter Temperatur, z.B. im Bereich von etwa 100-200 °C, vorzugsweise in der Schmelze. Dabei wird vorzugsweise die Dicarbonsäure vorgelegt, und die Diepoxidverbindung wird in einer geeigneten Zeitspanne, beispielsweise während 30 min, hinzugefügt. Bei der Synthese der Polyhydroxyester können neben dem Diepoxid und der Dicarbonsäure auch kleinere Mengen, z.B. bis 5 Mol%, der entsprechenden trifunktionellen Verbindungen eingesetzt werden, solange dabei immer noch lösliche Polymere erhalten werden. Die Menge des bei der Umsetzung verwendeten basichen Katalysators kann je nach Art des Katalysators variieren. Bei der Verwendung von tertiären Aminen haben sich Mengen von ca. 0,1-1 Gew.%, vorzugsweise 0,2-0,3 Gew.%, bezogen auf die Gesamtmenge der Edukte, als geeignet erwiesen. Die Umsetzung wird im allgemeinen so lange fortgesetzt, bis der Carboxylgehalt des Polyhydroxyesters konstant bleibt.

Die so hergestellten carboxylterminierten Polyhydroxyester weisen vorzugsweise ein Molekulargewicht (GPC in THF) $\overline{M}_n$ von 1000 bis 4000, insbesondere 1500 bis 3700, ein $\overline{M}_w/\overline{M}_n$ von 3 bis 8, insbesondere von 3,5 bis 6,5, einen Carboxylgruppengehalt von 0,3 bis 2,5, insbesondere von 0,4 bis 1,5 Aequivalentent/kg, und eine Glasumwandlungstemperatur im Bereich von -20 bis 50, insbesondere -15 bis 30 °C oder einen Schmelzpunkt im Bereich von 10 bis 80, insbesondere 20 bis 60 °C, auf.

Es ist überraschend, dass die definitionsgemässen carboxylterminierten Polyhydroxyester überhaupt als lösliche, thermoplastische Polymere synthetisiert werden konnten. Einige Literaturstellen beschreiben zwar die Umsetzung von Diepoxiden mit Dicarbonsäuren, berichten aber im allgemeinen, dass eine Isolierung von löslichen Polymeren nicht möglich ist, da schon vor der vollständigen Umsetzung der Edukte in der Regel gelierte, unlösliche Produkte gebildet werden. Bei den vorbeschriebenen Reaktionen werden dabei in der Regel höchstens äquimolare Mengen Dicarbonsäure mit Diepoxiden umgesetzt.

Matejka et al. in Makromol. Chem. 186 , 2025 (1985) und Härtel et al. in Plaste und Kautschuk 31 , 405 (1984) untersuchten die Umsetzung äquimolarer Mengen von Bisphenol-A-diglycidylether mit aliphatischen Dicarbonsäuren in der Schmelze und kamen zum Schluss, dass die Gelbildung vor vollständiger Umsetzung der Carboxylgruppen einsetzt, bzw. dass es nicht möglich ist, die Reaktion vor dem Erreichen des Gelpunktes zu unterbrechen und ein lösliches Additionsprodukt mit hoher Molmasse zu isolieren.

Die US 3,535,289 beschreibt die Reaktion von Diglycidylestem mit weniger als bis höchstens äquimolaren Mengen von Dicarbonsäuren, wobei epoxyterminierte Polyester, d.h. vorverlängerte Epoxidharze, resultieren, welche mit den üblichen Härtem für Epoxidharze vernetzt werden können. Gemäss dieser Literaturstelle führt eine Umsetzung mit mehr als äquimolaren Mengen Dicarbonsäure zu unerwünschten dreidimensionalen, vernetzten Produkten.

Auch in der US 3,256,226 wird die Umsetzung von Diepoxiden, insbesondere von Diglycidylethem, mit weniger als äquimolaren Mengen Dicarbonsäure beschrieben, wobei die so hergestellten epoxyterminierten Polyester anschliessend mit olefinisch ungesättigten Monocarbonsäuren endverkappt werden. So entstehen Polymere mit endständigen ungesättigten Gruppen, welche über diese reaktiven Doppelbindungen weiterpolymerisiert oder mit geeigneten ungesättigten Comonomeren zu Copolymeren verarbeitet werden können.

In der US 3,639,655 wird ausgeführt, dass im allgemeinen zwar hydroxylsubstituierte Polyester durch Umsetzung von Dicarbonsäuren mit Epoxidharzen hergestellt werden können, dass dabei aber in der Regel beträchtliche Probleme wegen der Gelierung der Produkte auftreten. Gemäss dieser Literaturstelle können diese Probleme vertnieden werden, wenn die Umsetzung im wesentlichen äquimolarer Mengen von Diglycidylethem und Dicarbonsäuren in aprotischen polaren organischen Lösungsmitteln durchgeführt wird. Im Vergleichsbeispiel IX wird gezeigt, dass bei Verwendung von nicht polarem Xylol als Lösungsmittel nur ein geliertes, vernetztes Polymer erhalten wird. Die in polaren Lösungsmitteln hergestellten löslichen Polyhydroxyester können durch Erhitzen mit Polyisocyanaten oder Anhydriden vemetzt werden. Die Verwendung dieser Polyhydroxyester in heiss-aktivierbaren thermoplastischen Klebstoffen wird in der US 4,430,479 beschrieben.

Ueberraschenderweise wurde nun gefunden, dass bei Verwendung des weiter oben definierten Ueberschusses an Dicarbonsäuren, Diepoxide problemlos zu löslichen carboxylendständigen Polyhydroxyestem umgesetzt werden können und zwar unabhängig davon, ob die Reaktion in Lösung oder in der Schmelze durchgeführt wird.

In J. Poly. Sci. A-1, Band 7, 2117 (1969) beschreibt F.B. Alvey eine Untersuchung der Epoxid/Carbonsäure-Umsetzung an Hand von Modellreaktionen. Dabei werden auch Polyhydroxyester-Polymere aus Bisphenol-A-diglycidylether und Adipinsäure hergestellt. Obwohl die meisten Polymere aus äquimolaren Mengen der Edukte hergestellt wurden, wird auch ein carboxylterminierter Polyhydroxyester

(Polymer P-5) beschrieben, der durch Umsetzung von 0,95 Mol Bisphenol-A-diglycidylether mit 1 Mol Adipinsäure erhalten wurde. In diesem Beispiel wird die Reaktion in einem 2-Stufen-Prozess bei 125 °C in insgesamt 7 Stunden durchgeführt und kurz vor der Gelierung abgebrochen. Bei dieser Temperatur ist die Adipinsäure noch nicht geschmolzen (Fp. 155 °C), so dass eine heterogene Reaktion stattfindet. Dies führt zu uneinheitlichen Produkten, da die Epoxidgruppen verstärkt die Möglichkeit zur Homopolymerisation haben.

Die Verwendung von Polyhydroxyestem als Härtungsmittel für Epoxidharze ist nicht bekannt.

Die Polyhydroxyester-Komponente (b) der erfindungsgemässen härtbaren Stoffgemische wird vorzugsweise durch Umsetzung von Diepoxiden, ausgewählt aus (b1) Diglycidylethem, (b2) Diglycidylestem oder (b3) cycloaliphatischen Epoxidharzen mit einer Dicarbonsäure mit 2-40 Kohlenstoffatomen hergestellt.

Geeignete Diepoxide (b1), (b2) und (b3) sind die weiter oben als geeignete Epoxidharze beschriebenen Verbindungen.

Als Dicarbonsäure kann im Prinzip jede bekannte Dicarbonsäure eingesetzt werden, welche ausser den Carboxylgruppen keine weiteren mit den Epoxidgruppen reaktionsfähige funktionelle Gruppen hat. Es können aliphatische, cycloaliphatische oder aromatische Dicarbonsäuren eingesetzt werden. Geeignet sind auch Säuren, welche durch Dimerisierung natürlicher langkettiger, ungesättigter Fettsäuren erhalten werden, wie z.B. die $C_{36}$-Dimersäure. Beispiele geeigneter Dicarbonsäuren sind Phthalsäure, Isophthalsäure, Terephthalsäure, Oxalsäure, Bernsteinsäure, Glutarsäure, Adipinsäure, Pimelinsäure, Süberinsäure, Azelainsäure, Sebacinsäure, Dodecandisäure, Tetradecandisäure, Eicosandisäure, Hexahydrophthalsäure und Cyclopentandicarbonsäure. Im allgemeinen werden Säuren mit tieferem Schmelzpunkt, z.B. unter etwa 160 °C bevorzugt.

Besonders bevorzugte Diepoxide sind Diglycidylether von Bisphenol A oder von Neopentylglykol, Diglycidylester der Hexahydrophthalsäure, der Phthalsäure, der Terephthalsäure, der Adipinsäure oder der Sebacinsäure, 3,4-Epoxycyclohexylmethyl3′,4′-epoxycyclohexancarboxylat und Bis(3,4-epoxycyclohexylmethyl)adipat. Besonders bevorzugte Dicarbonsäuren sind Adipinsäure, Sebacinsäure, Dodecandisäure, Tetradecandisäure, Süberinsäure oder Eicosandisäure.

Die Polyhydroxyester (b) können auch durch Umsetzung eines Gemisches aus zwei oder mehreren der Diepoxide (b1), (b2) oder (b3) hergestellt werden.

Die erfindungsgemässen härtbaren Epoxidharz-Stoffgemische eignen sich für die Herstellung von vernetzten Produkten. Dabei können die Gemische zusätzlich zum Polyhydroxyester (b) noch weitere in der Technik der Epoxidharze übliche Härter oder Härtungsbeschleuniger sowie weitere übliche Zusätze enthalten.

Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die Härtung der Stoffgemische erfolgt vorzugsweise bei erhöhter Temperatur, z.B. zwischen etwa 100-250 °C, insbesondere zwischen etwa 150-200 °C.

Die erfindungsgemässen Gemische lassen sich beispielsweise als Klebstoffe, Klebefilme, Patches, Matrixharze, Lacke oder Dichtungsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze, Matrixharze und Klebemittel verwendet werden.

Die Erfindung betrifft auch die Verwendung der erfindungsgemässen Gemische für die Herstellung von Klebstoffen oder Beschichtungsmassen.

Ganz besonders eignen sich die härtbaren Stoffgemische für die Herstellung von Klebstoffen, insbesondere als Einkomponenten-Schmelzkleber bzw. -Haftschmelzkleber. Als Epoxidharzkomponente (a) ist dabei Triglycidylisocyanurat besonders geeignet.

Nicht kristalline Polyhydroxyester (z.B. aus Hexahydrophthalsäurediglycidylester und gesättigten aliphatischen Dicarbonsäuren mit 6-10 C-Atomen bzw. Terephthalsäurediglycidylester und Sebacinsäure) lassen sich mit Triglycidylisocyanurat (TGIC) zu Haftschmelzklebern formulieren, d.h. diese Mischungen sind vor der Aushärtung klebrig und erleichtern so das Zusammenfügen der Teile. Die Klebrigkeit dieser Gemische ist während mindestens 3 Wochen bei Raumtemperatur gewährleistet. Die Haftschmelzkleber können z.T. bei Raumtemperatur oder erhöhter Temperatur verklebt werden und sind beim Abkühlen so klebrig, dass die Klebeteile nicht sofort durch Klemmen oder ähnliches fixiert werden müssen. Die Endhärtung erfolgt

dann z.B. bei 180 °C. Diese Haftschmelzkleber sind nach der Aushärtung sehr flexibel und haben trotzdem eine hohe Klebefestigkeit.

Kristalline Polyhydroxyester (z.B. aus Bisphenol A-diglycidylether und Eicosandisäure) ergeben mit TGIC Schmelzkleber mit z.B. Fp. 50-70 °C, sehr guter Klebefestigkeit und Haftung nach der Aushärtung trotz hoher Flexibilität, und sehr guter Hydrolysebeständigkeit.

Die oben beschriebenen Klebstoffe zeichnen sich durch eine überraschend gute Haftung aus, auch auf öligem Stahl, trotz der hohen Flexibilität. Eine gute Haftung ist sonst mit flexiblen Klebstoffen nur schwer zu erreichen.

Auch die mit den erfindungsgemässen härtbaren Stoffgemischen hergestellten Beschichtungen zeichnen sich durch besonders gute Eigenschaften aus, insbesondere durch eine hohe Flexibilität und sehr gute Haftung.

Gegenstand vorliegender Erfindung sind auch Polyester-Stoffgemische enthaltend mindestens zwei verschiedene weiter oben definierte carboxyltertninierte Polyhydroxyester. Bei manchen Anwendungen bringt der Einsatz solcher Gemische als Komponente (b) gewisse Vorteile, da auf diese Weise die Eigenschaften der geharteten Produkte massgeschneidert werden können, z.B. durch Kombination eines Polyhydroxyesters, der mehr Klebrigkeit verleiht, mit einem Polyhydroxyester, der mehr Festigkeit verleiht. Solche Polyester-Stoffgemische können entweder durch Zusammenmischen der einzelnen Polyhydroxyester hergestellt werden oder durch Umsetzung von mehr als einem Diepoxid mit einer oder mehreren Dicarbonsäuren oder durch Umsetzung mehr als einer Dicarbonsäure mit einem oder mehreren Diepoxiden.

Als besonders vorteilhaft haben sich Polyester-Stoffgemische erwiesen, welche (i) ein Umsetzungsprodukt eines Diglycidylethers (b1) oder eines cycloaliphatischen Epoxidharzes (b3) mit einer Dicarbonsäure und (ii) ein Umsetzungsprodukt eines Diglycidylesters (b2) mit einer Dicarbonsäure enthalten. Die Verwendung solcher Gemische als Komponente (b) der härtbaren Stoffgemische resultiert in Haftschmelzklebern mit besonders hoher Zugscherfestigkeit.

Ein weiterer Gegenstand der Erfindung sind carboxylterminierte Polyhydroxyester erhältlich durch Umsetzung eines Diepoxids ausgewählt aus (b2) Diglycidylestern oder (b3) cycloaliphatischen Epoxidharzen mit einer Dicarbonsäure in Gegenwart eines basischen Katalysators, wobei die Mengen des Diepoxids und der Dicarbonsäure so gewählt werden, dass pro Epoxidgruppe des Diepoxids 1,04 bis 1,4 Carboxylgruppen der Dicarbonsäure vorhanden sind, sowie ein Verfahren zu deren Herstellung. Wie weiter oben ausgeführt, wird die Umsetzung vorzugsweise der Schmelze in Gegenwart eines tertiären Amins als Katalysator durchgeführt. Bei der Umsetzung von cycloaliphatischen Epoxidharzen werden dabei pro Mol Diepoxid vorzugsweise 1,2 bis 1,3 Mol Dicarbonsäure eingesetzt.

Zusätzlich zu der oben beschriebenen Verwendung der Polyhydroxyester (b) in den härtbaren Stoffgemischen können die erfindungsgemässen carboxylterminierten Polyhydroxyester und die erfindungsgemässen Polyester-Stoffgemische enthaltend mindestens zwei verschiedene carboxylterminierte Polyhydroxyester als solche als Bindemittel für die Herstellung von Klebstoffen, Ueberzügen oder Formkörpern verwendet werden. Zudem können sie auch als Vernetzungsmittel für Verbindungen, welche mit den Hydroxyl- oder Carboxylgruppen der Polyhydroxyester reaktionsfähige funktionelle Gruppen aufweisen, eingesetzt werden.

Die folgenden Beispiele erläutern die Erfindung.

## BEISPIELE

### A. Herstellung der carboxylterminierten Polyhydroxyester

Die Dicarbonsäure wird in einem Sulfierkolben mit Rührer und Thermometer bei 130-160 °C aufgeschmolzen je nach Schmelzpunkt). Wenn die Säure geschmolzen ist, wird der Katalysator hinzugefügt (0,25 Gew.-% Benzyldimethylamin). Die Epoxidverbindung wird in kleinen Portionen hinzugefügt. Währenddessen wird die Oelbadtemperatur langsam auf 130 °C gesenkt. Die Reaktion wird so lange fortgesetzt, bis der COOH-Gehalt konstant bleibt. Die Polyhydroxyester können z.B. aus Aceton/Hexan bzw. THF/Hexan umgefällt werden.

Die so hergestellten Produkte sind in polaren organischen Lösungsmitteln lösliche, viskose bis feste, amorphe oder kristalline Substanzen, mit einer Tg [DSC auf Mettler TA 3000 mit 10 °C/min] von -20 bis 50 °C, oder einem Schmelzpunkt, Fp. 10-80 °C, einem COOH-Gehalt von 0,3-2,5 Aeq.kg, einer Säurezahl von 10 bis 130 mg KOH/g, einem Molekulargewicht (GPC in THF) $\overline{M}_n$ von 1000-4000 und $\overline{M}_w / \overline{M}_n$ von 3-8.

Bei der Herstellung der carboxylterminierten Polyhydroxyester werden die folgenden Diepoxide und Dicarbonsäuren verwendet:

a)Diepoxide

BADGE1: Bisphenol A-diglycidylether (kristallin) mit einem Epoxidgehalt von 6,06 Aequ./kg
BADGE2: Ein festes Bisphenol A-Epoxidharz mit einem Epoxidgehalt von 2,62 Aequ./kg
HHDGE: Hexahydrophthalsäurediglycidylester mit einem Epoxidgehalt von 6,96 Aequ./kg
TDGE: Terephthalsäurediglycidylester mit einem Epoxidgehalt von 7,19 Aequ./kg ADGE: Adipinsäurediglycidylester mit einem Epoxidgehalt von 7,74 Aequ./kg
PDGE: Phthalsäurediglycidylester mit einem Epoxidgehalt von 7,19 Aequ./kg
NPDGE: Neopentylglykoldiglycidylether mit einem Epoxidgehalt von 7,32 Aequ./kg
EPCH1: 3,4-Epoxycyclohexylmethyl-3',4'-epoxycyclohexancarboxylat mit einem Epoxidgehalt von 7,21 Aequ./kg
EPCH2: Bis(3,4-epoxycyclohexylmethyl)adipat mit einem Epoxidgehalt von 5,00 Aequ./kg

b)Dicarbonsäuren

AS: Adipinsäure
DDDS: Dodecandisäure
TDDS: Tetradecandisäure
SES: Sebacinsäure
EDS: Eicosandisäure
SUS: Süberinsäure (Korksäure)

Beispiel 1 (BADGE1/AS):

24,3 g (0,33 Aequ. COOH) Adipinsäure werden in einem 200 mi-Sulfierkolben mit Rührer und Thermometer bei 165° C (Oelbadtemperatur) geschmolzen und 0,19 ml Benzyldimethylamin werden hinzugefügt. 50 g BADGE1 (0,3 Aequ. Epoxy) werden in kleinen Portionen während 30 min. hinzugefügt. Die Temperatur des Oelbades wird in dieser Zeit langsam auf 130° C gesenkt.

Nach 160 min. Reaktionszeit beträgt der Gehalt an COOH-Endgruppen 0,99 Aequ./kg; Tg 24-38° C.

Beispiel 2 (HHDGE/DDDS):

60,38 g Dodecandisäure (0,52 Aequ. COOH) werden in einem Sulfierkolben mit Rührer und Thermometer bei 130° C geschmolzen und 0,33 ml Benzyldimethylamin werden hinzugefügt. 72 g Hexahydrophthalsäurediglycidylester (0,51 Aequ. Epoxy) werden hinzugefügt. Nach 2 h bei 130° C ist die Reaktion beendet.

Gehalt an COOH-Gruppen des ungereinigten Produkts:
0,44 Aequ./kg; Tg-11-1° C.

Beispiel 3 (TDGE/TDDS):

61,6 g Tetradecandisäure (0,48 Aequ. COOH) werden in einem Sulfierkolben mit Rührer und Thermometer bei 140° C geschmolzen. 0,31 ml Benzyldimethylamin werden beigegeben und 63,25 g Terephthalsäurediglycidylester (0,455 Aequ. Epoxy) werden langsam hinzugefügt. Die Oelbadtemperatur wird nach der Zugabe auf 130° C gesenkt. Nach 180 min sind keine freien Epoxidgruppen mehr nachweisbar, worauf die Reaktion abgebrochen wird. Gehalt an COOH-Endgruppen des ungereinigten Produkts: 0,63 Aequ./kg; Tg 14-22° C.

Beispiele 4-31:

Die folgenden carboxylterminierten Polyhydroxyester werden wie oben beschrieben hergestellt:

| Beispiel | Ausgangssubstanzen | Aequ. COOH / Aequ. Epoxy | Polyhydroxyester COOH (Aequ./kg) | $\bar{M}_n$ | $\bar{M}_w$ | Tg bzw. (Fp) °C |
|---|---|---|---|---|---|---|
| 4 | HHDGE/AS | 1,05 | 1,10 | 2600 | 10500 | -15- -3 |
| 5 | HHDGE/SES | 1,05 | 0,77 | 2500 | 16600 | - 9- -1 |
| 6 | HHDGE/DDDS | 1,05 | 0,44 | 3100 | 12800 | -11- -1 |
| 7 | HHDGE/TDDS | 1,05 | 0,43 | 3700 | 12700 | (18) |
| 8 | HHDGE/EDS | 1,05 | 0,30 | 3500 | 21000 | (61) |
| 9 | BADGE1/AS | 1,09 | 0,99 | 1900 | 14900 | 24-38 |
| 10 | BADGE1/SES | 1,10 | 0,70 | — | — | 10-18 |
| 11 (11A) | BADGE1/DDDS | 1,05 (1,10) | 0,52 | 2900 | 20500 | 10-19 |
| 12 (12A) | BADGE1/EDS | 1,05 (1,20) | 0,69 | 2700 | 16800 | (59) |
| 13 | TDGE/AS | 1,05 | 0,71 | 2300 | 29500 | 14-22 |
| 14 | TDGE/SES | 1,05 | 1,44 | 1600 | 5000 | 2- 8 |
| 15 | TDGE/DDDS | 1,05 | 1,05 | 3700 | 11700 | (54) |
| 16 | TDGE/TDDS | 1,05 | 0,63 | 3000 | 9200 | (75) |
| 17 | HHDGE/BADGE1/DDDS (1,35/0,56/1,59 Gew.T.) | 1,08 | 1,66 | 1500 | 5400 | -21- -12 (45, 55) |
| 18 | HHDGE/BADGE1/AS/DDDS (1,62/0,56/0,87/0,44 Gew.T.) | 1,07 | 1,36 | 1600 | 5600 | -15- -6 |
| 19 | HHDGE/BADGE1/SES/DDDS (1,43/0,56/1,07/0,44 Gew.T.) | 1,12 | 2,21 | 1000 | 3100 | -23- -13 (46) |
| 20 | BADGE2/DDDS | 1,10 | 0,51 | 3600 | 19500 | 38-44 |
| 21 | BADGE2/SUS | 1,10 | 0,53 | 5000 | 17100 | 47-56 |
| 22 | ADGE/AS | 1,10 | 1,10 | 1000 | 4600 | -33- -24 |
| 23 | ADGE/DDDS | 1,05 | 0,88 | 2100 | 7400 | (12,9) |
| 24 | PDGE/AS | 1,10 | 1,94 | 1800 | 4300 | 10-21 |
| 25 | PDGE/SES | 1,05 | 0,70 | 2500 | 9600 | - 8- 2 |
| 26 | PDGE/DDDS | 1,05 | 0,55 | 2900 | 14400 | -11- -2 |
| 27 | PDGE/TDDS | 1,05 | 0,70 | 2700 | 11700 | (22) |
| 28 | EPCH1/DDDS | 1,20 | 1,28 | 2300 | 18700 | 4-19 |
| 29 | EPCH1/AS | 1,20 | 1,59 | 1500 | 14600 | 28-41 |
| 30 | NPDGE/AS | 1,10 | 1,71 | 2200 | 8700 | -31- -21 |
| 31 | EPCH2/AS | 1,20 | 1,52 | 2400 | 42600 | 23-34 |

B. Härtbare Stoffgemische aus carboxylterminierten Polyhydroxyestern und Triglycidylisocyanurat (TGIC)

Die Stoffgemische sind vor der Aushärtung sehr viskose (Tg-10 - 20° C), klebrige bzw. feste Mischungen (Fp bis 70° C) und haben eine gute Lagerstabilität bei Raumtemperatur (Abnahme der Restenthalpie um höchstens die Hälfte innerhalb von 2 Wochen; viele Formulierungen zeigen noch geringere Abnahme).

Die klebrigen Formulierungen behalten ihre Klebrigkeit während mindestens 3 Wochen bei Raumtemperatur; diese Mischungen können bei Raumtemperatur bis erhöhter Temperatur appliziert werden und haften nach Abkühlung sehr gut auf Al und entfettetem Stahl.

Nach der Aushärtung: sehr flexible transparente bis trübe Filme mit Tg 0-30° C, Erichsen-Tiefung von 75 µm dicken Schichten > 10 mm; sehr gute Haftung auf entfettetem und geöltem Stahl; Zugscherfestigkeit bis 17 MPa, was für solch flexible Produkte sehr hoch ist.

B.1. Herstellung von Haftschmelzklebern und deren Anwendung

Beispiel 32:

2 g saurer Polyhydroxyester aus HHDGE und Adipinsäure hergestellt gemäss Beispiel 4 und 2,5 g saurer Polyhydroxyester aus BADGE1 und Dodecandisäure, hergestellt nach Beispiel 11 werden mit 0,39 g TGIC bei 110° C vermischt. Beim Abkühlen entsteht eine trübe, hochviskose, klebrige Masse. Die Klebrigkeit bleibt während mindestens 3 Wochen bei Raumtemperatur bestehen. Verklebung auf geöltem Stahl bei 110° C.

Zugscherfestigkeit (DIN 53283) nach Aushärtung (30 min, 180° C): 15 MPa; nach 2 Wochen Wasserlagerung bei Raumtemperatur: 12,5 MPa. Tg nach Aushärtung: 17-25° C.

Beispiel 33:

2,5 g saurer Polyhydroxyester aus HHDGE und TDDS, hergestellt gemäss Beispiel 7 und 1 g saurer Polyhydroxyester aus BADGE1/DDDS, hergestellt nach Beispiel 11 werden mit 0,17 g TGIC vermischt. Beim Abkühlen entsteht eine klare, hochviskose, klebrige Masse, die ihre Klebrigkeit während mindestens 3 Wochen bei Raumtemperatur behält.

Verklebung auf geöltem Stahl bei 110° C.

Zugscherfestigkeit (DIN 53283) nach Aushärtung (30 min, 180° C): 6 MPa; nach 2 Wochen Wasserlagerung bei Raumtemperatur: 1,5 MPa. Tg nach Aushärtung: 1-9° C.

Beispiel 34:

2,5 g saurer Polyhydroxyester aus Terephthalsäurediglycidylester und Sebacinsäure, hergestellt gemäss Beispiel 14 werden mit 0,38 g TGIC bei 110° C vermischt. Beim Abkühlen entsteht eine klare, hochviskose, klebrige Masse, die ihre Klebrigkeit während mindestens 3 Wochen bei Raumtemperatur behält. Zugscherfestigkeit (DIN 53283) nach Aushärtung (30 min, 180° C): 11 MPa; nach 2 Wochen Wasserlagerung bei Raumtemperatur: 6,9 MPa. Tg nach Aushärtung: 16-26° C.

Beispiele 35-44:

Die folgenden Haftschmelzkleber-Formulierungen werden wie oben beschrieben hergestellt, 30 min bei 180° C gehärtet und geprüft.

| Beispiel | Formulierung | Tg (°C) | Zugscherfestigkeit (DIN 53283) | |
|---|---|---|---|---|
| | | | gleich nach der Härtung (MPa) | nach 2 Wochen Wasserlagerung bei RT (MPa) |
| 35 | 2,50 g Produkt aus Bsp. 4<br>2,50 g Produkt aus Bsp. 11A<br>0,39 g TGIC | 7-24 | 15,0 (70 % K[1]) | 12,5 (100 % A[2]) |
| 36 | 2,50 g Produkt aus Bsp. 4<br>1,00 g Produkt aus Bsp. 11A<br>0,31 g TGIC | 17-24 | 17,0 (70 % K[1]) | 9,2 (100 % A[2]) |
| 37 | 2,50 g Produkt aus Bsp. 7<br>1,00 g Produkt aus Bsp. 11A<br>0,17 g TGIC | 1-9 | 6,0 (90 % A[2]) | 1,5 (100 % A[2]) |
| 38 | 2,50 g Produkt aus Bsp. 14<br>0,38 g TGIC | 16-26 | 11,0 (90 % A[2]) | 6,9 (100 % A[2]) |
| 39 | 2,50 g Produkt aus Bsp. 18<br>0,36 g TGIC | 18-26 | 15,7 (50 % K[1]) | — |
| 40 | 2,50 g Produkt aus Bsp. 19<br>0,59 g TGIC | 9-21 | 10,8 (40 % K[1]) | — |
| 41 | 5,00 g Produkt aus Bsp. 27<br>0,38 g TGIC | -4-4 | 2,5 (70 % K[1]) | 2,3 (70 % A[2]) |

[1]Kohäsionsbruch
[2]Adhäsionsbruch

B.2. Herstellung von Schmelzklebern und deren Anwendung

Beispiel 42:

19,1 g saurer Polyhydroxyester aus BADGE1/Dodecandisäure, hergestellt gemäss Beispiel 11 werden mit 1,16 g TGIC bei 110°C vermischt, so dass eine homogene, klare Lösung entsteht. Beim Abkühlen entsteht eine feste, nicht klebrige Masse mit einer Tg von 5-17°C.

Verklebung auf geöltem Stahl: Die Formulierung wird bei 110°C aufgeschmolzen, auf Bleche aus geöltem Stahl aufgetragen, verklebt und 30 min bei 180°C gehärtet. Zugscherfestigkeit (DIN 53283) nach Härtung: 14,7 MPa Zugscherfestigkeit nach 2 Wochen Wasserlagerung bei Raumtemperatur: 8 MPa Tg der ausgehärteten Formulierung: 17-27°C.

Beispiel 43:5 g

Polyhydroxyester aus HHDGE/Tetradecandisäure, hergestellt gemäss Beispiel 7 und 5 g saurer Polyhydroxyester aus BADGE1/Eicosandisäure, hergestellt gemäss Beispiel 12 werden mit 0,68 g TGIC bei 110°C vermischt. Beim Abkühlen entsteht eine feste, nicht klebrige Masse mit Schmelzpunkt 54°C. Verklebung auf geöltem Stahl: Die Formulierung wird bei 110°C aufgeschmolzen, auf Bleche aus geöltem Stahl aufgetragen, verklebt und 30 min bei 1 80°C gehärtet.
Zugscherfestigkeit (DIN 53283) nach Härtung: 10,2 MPa
Zugscherfestigkeit nach 2 Wochen Wasserlagerung bei Raumtemperatur: 6,6 MPa
Tg der ausgehärteten Formulierung: -10-17°C
Fp von kristallinen Anteilen: 41°C.

Beispiele 44-53:

Die folgenden Schmelzkleber-Formulierungen werden wie oben beschrieben hergestellt und vor und nach der Härtung (30 min bei 180 °C) geprüft.

| Beispiel | Formulierung | Fp bzw. Tg (°C) vor / nach der Härtung | | Aspekt nach der Härtung | Zugscherfestigkeit (DIN 53283) (MPa) | |
|---|---|---|---|---|---|---|
| | | vor | nach | | gleich nach der Härtung | nach 2 Wochen Wasserlagerung |
| 44 | 5,00 g Produkt aus Bsp. 8<br>0,16 g TGIC | Fp 60 | Fp 40-50 | flexibel, trüb | 6,8 (50 % A[1]) | 6,8 (50 % A[1]) |
| 45 | 19,10 g Produkt aus Bsp. 11<br>1,16 g TGIC | Tg 5-17 | Tg 17-27 | flexibel, trüb | 14,7 (80 % A[1]) | 8,0 (100 % A[1]) |
| 46 | 13,2 g Produkt aus Bsp. 12A<br>1,16 g TGIC | Fp 56 | Fp 20, 48 | flexibel, klar | 15,3 (80 % A[1]) | 16,2 (100 % A[1]) |
| 47 | 5,00 g Produkt aus Bsp. 8<br>5,00 g Produkt aus Bsp. 12A<br>0,53 g TGIC | Tg -8-3 | Fp 38 | flexibel, klar | 9,7 (80 % A[1]) | 8,5 (100 % A[1]) |
| 48 | 5,00 g Produkt aus Bsp. 7<br>5,00 g Produkt aus Bsp. 12A<br>0,68 g TGIC | Fp 54 | Fp 41<br>Tg -12-17 | flexibel, leicht trüb | 10,2 (100 % A[1]) | 6,6 (100 % A[1]) |
| 49 | 5,00 g Produkt aus Bsp. 4<br>5,00 g Produkt aus Bsp. 12A<br>0,93 g TGIC | Fp 54 | Fp 46<br>Tg 5-15 | flexibel, trüb | 6,7 (50 % K[2]) | 5,8 (100 % A[1]) |
| 50 | 5,00 g Produkt aus Bsp. 5<br>5,00 g Produkt aus Bsp. 12A<br>0,89 g TGIC | Tg -11-0 | Fp 47 | — | 5,0 (50 % K[2]) | — |
| 51 | 5,00 g Produkt aus Bsp. 24<br>0,51 g TGIC | — | Tg 23-29 | — | 15,0 (50 % K[2]) | 6,5 (80 % A[1]) |

| Beispiel | Formulierung | Fp bzw. Tg (°C) vor / nach der Härtung | | Aspekt nach der Härtung | Zugscherfestigkeit (DIN 53283) (MPa) | |
|---|---|---|---|---|---|---|
| | | vor | nach | | gleich nach der Härtung | nach 2 Wochen Wasserlagerung |
| 52 | 5,00 g Produkt aus Bsp. 28<br>0,71 g TGIC | — | Tg 17-32 | — | 15,9 (50 % K[2]) | 13,7 (80 % A[1]) |
| 53 | 5,00 g Produkt aus Bsp. 29<br>0,86 g TGIC | — | Tg 57-59 | — | 13,0 (80 % A[1]) | 12,5 (100 % A[1]) |

[1]Adhäsionsbruch
[2]Kohäsionsbruch

B.3. Herstellung von Beschichtungen

Beispiel 54:

Das Gemisch aus Beispiel 43 wird bei 110 °C aufgeschmolzen und mit Hilfe eines Ziehdreicks auf ein Al-Blech aufgetragen, so dass ein 75 µm dicker Film entsteht. Der Film wird 30 min bei 180 °C gehärtet. Die Erichsen-Tiefung (DIN 53156) des ausgehärteten Films beträgt mehr als 10 mm.

Beispiel 55:

Das Gemisch aus Beispiel 32 wird wie in Beispiel 54 beschrieben als 75 µm dicker Film auf ein Al-Blech aufgetragen und 30 min bei 180 °C gehärtet. Die Erichsen-Tiefung (DIN 53156) des ausgehärteten Films beträgt mehr als 10 mm.

Beispiele 56-60:

Auf analoge Art, wie oben beschrieben werden aus folgenden Gemischen Beschichtungen hergestellt und die Erichsen-Tiefung bestimmt.

| Beispiel | Gemisch aus Bsp. Nr. | Erichsen-Tiefung (DIN 53156) |
|---|---|---|
| 56 | 35 | > 10 mm |
| 57 | 36 | > 10 mm |
| 58 | 46 | > 10 mm |
| 59 | 48 | > 10 mm |
| 60 | 50 | > 10 mm |

C. Härtbare Stoffgemische aus carboxylterminierten Polyhydroxyestern und einem Glycidylderivat von Bisphenol A, Kresol-Novolak oder Diaminodiphenylmethan

Beispiel 61:

5 g Produkt aus Beispiel 20 werden mit 0,46 g BADGE1 bei ca. 100 °C vermischt. Beim Abkühlen entsteht eine feste, nicht klebrige Masse mit einem Tg von 38-44 °C.
Verklebung auf geöltem Stahl: Die Formulierung wird bei 110 °C aufgeschmolzen, auf Bleche aus geöltem Stahl aufgetragen, verklebt und 30 Min. bei 180 °C gehärtet.
Zugscherfestigkeit nach Härtung: 18,2 MPa.
Zugscherfestigkeit nach 2 Wochen Wasserlagerung bei Raumtemperatur: 15,8 MPa.
Tg der ausgehärteten Formulierung: 50-56 °C.

Beispiel 62:

5 g Produkt aus Beispiel 24 wurden mit 1,04 g Epoxy-Kresol-Novolak (4,6 Epoxidäquiv./kg) bei 100 °C vermischt. Beim Abkühlen entsteht eine feste, nicht klebrige Masse mit Tg 11-21 °C.
Verklebung auf geöltem Stahl wie in Beispiel 61 beschrieben.
Zugscherfestigkeit nach Härtung: 9,8 MPa.

Zugscherfestigkeit nach 2 Wochen Wasserlagerung bei Raumtemperatur: 5,7 MPa.
Tg der ausgehärteten Formulierung: 15-27° C.

Beispiel 63:

2,5 g Produkt aus Beispiel 4 und 2,5 g Produkt aus Beispiel 20 wurden mit 0,48 g Tetraglycidyldiaminodiphenylmethan bei 100° C vermischt.
Verklebung auf geöltem Stahl wie in Beispiel 61 beschrieben.
Zugscherfestigkeit nach Härtung: 14,9 MPa.
Zugscherfestigkeit nach 2 Wochen Wasserlagerung bei Raumtemperatur: 13,3 MPa.
Tg der ausgehärteten Formulierung: 24-33° C.

## Ansprüche

1. Härtbares Stoffgemisch enthaltend
(a) ein Epoxidharz und
(b) einen carboxylterminierten Polyhydroxyester erhältlich durch Umsetzung eines Diepoxids mit einer Dicarbonsäure in Gegenwart eines basischen Katalysators, wobei die Mengen des Diepoxids und der Dicarbonsäure so gewählt werden, dass pro Epoxidgruppe des Diepoxids 1,04 bis 1,4 Carboxylgruppen der Dicarbonsäure vorhanden sind.

2. Stoffgemisch nach Anspruch 1, worin die Komponente (b) durch Umsetzung eines Diepoxids ausgewählt aus (b1) Diglycidylethern, (b2) Diglycidylestern oder (b3) cycloaliphatischen Epoxidharzen mit einer Dicarbonsäure mit
2-40 Kohlenstoffatomen hergestellt wird.

3. Stoffgemisch nach Anspruch 2, worin (b1) ein Diglycidylether von Bisphenol A oder von Neopentylglykol ist, (b2) ein Diglycidylester der Hexahydrophthalsäure, der Phthalsäure, der Terephthalsäure, der Adipinsäure oder der Sebacinsäure ist, (b3) 3,4-Epoxycyclohexylmethyl-3′,4′-epoxycyclohexancarboxylat oder Bis(3,4-epoxycyclohexylmethyl)adipat ist und die Dicarbonsäure Adipinsäure, Sebacinsäure, Dodecandisäure, Tetradecandisäure, Süberinsäure oder Eicosandisäure ist.

4. Stoffgemisch nach Anspruch 2, worin die Komponente (b) durch Umsetzung eines Gemisches aus zwei oder mehreren der Diepoxide (b1), (b2) oder (b3) hergestellt wird.

5. Stoffgemisch nach einem der Ansprüche 1 bis 4, worin die Komponente (b) ein Molekulargewicht $\overline{M}_n$ von 1000 bis 4000, ein $\overline{M}_w/\overline{M}_n$ von 3 bis 8, einen Carboxylgruppengehalt von 0,3 bis 2,5 Aequivalenten/kg und eine Glasumwandlungstemperatur im Bereich von -20 bis 50° C oder einen Schmelzpunkt im Bereich von 10 bis 80° C aufweist.

6. Polyester-Stoffgemisch enthaltend mindestens zwei verschiedene carboxylterminierte Polyhydroxyester, welche jeweils erhältlich sind durch Umsetzung eines Diepoxids mit einer Dicarbonsäure in Gegenwart eines basischen Katalysators, wobei die Mengen des Diepoxids und der Dicarbonsäure jeweils so gewählt werden, dass pro Epoxidgruppe des Diepoxids 1,04 bis 1,4 Carboxylgruppen der Dicarbonsäure vorhanden sind.

7. Stoffgemisch nach Anspruch 6, enthaltend (i) ein Umsetzungsprodukt eines Diglycidylethers (b1) oder eines cycloaliphatischen Epoxidharzes (b3) mit einer Dicarbonsäure und (ii) ein Umsetzungsprodukt eines Diglycidylesters (b2) mit einer Dicarbonsäure.

8. Carboxylterminierte Polyhydroxyester erhältlich durch Umsetzung eines Diepoxids ausgewählt aus (b2) Diglycidylestern oder (b3) cycloaliphatischen Epoxidharzen mit einer Dicarbonsäure in Gegenwart eines basischen Katalysators, wobei die Mengen des Diepoxids und der Dicarbonsäure so gewählt werden, dass pro Epoxidgruppe des Diepoxids 1,04 bis 1,4 Carboxylgruppen der Dicarbonsäure vorhanden sind.

9. Verfahren zur Herstellung von carboxyltertninierten Polyhydroxyestern, worin ein Diepoxid ausgewählt aus (b2) Diglycidylestern oder (b3) cycloaliphatischen Epoxidharzen in Gegenwart eines basischen Katalysators mit einer Dicarbonsäure, vorzugsweise in der Schmelze in Gegenwart eines tertiären Amins als Katalysator, umgesetzt wird, wobei die Mengen des Diepoxids und der Dicarbonsäure so gewählt werden, dass pro Epoxidgruppe des Diepoxids 1,04 bis 1,4 Carboxylgruppen der Dicarbonsäure vorhanden sind.

10. Verwendung der Stoffgemische nach Anspruch 6 oder der Polyhydroxyester nach Anspruch 8 für die Herstellung von Klebstoffen, Beschichtungen oder Formkörpern.

11. Verwendung der Stoffgemische nach Anspruch 6 oder der Polyhydroxyester nach Anspruch 8 als Vernetzungsmittel für Verbindungen, welche mit den Hydroxyl- oder Carboxylgruppen der Polyhydroxyester

reaktionsfähige funktionelle Gruppen aufweisen.

12. Verwendung der Stoffgemische nach Anspruch 1 für die Herstellung von vernetzten Produkten, insbesondere von Klebeverbindungen oder Beschichtungen.